# EUROPÄISCHE PATENTSCHRIFT

(11) **EP 3 215 378 B1**
(45) Veröffentlichungstag und Bekanntmachung des Hinweises auf die Patenterteilung: **22.07.2020**
(21) Anmeldenummer: 15780824.7
(22) Anmeldetag: 12.10.2015
(51) Int. Cl.: B60G 15/06, F16F 1/12, F16F 9/32

(54) **STOSSDÄMPFER MIT EINEM DARAN BEFESTIGTEN FEDERTELLER UND VERFAHREN ZUM BEFESTIGEN EINES FEDERTELLERS AN EINEM STOSSDÄMPFER**
SHOCK-ABSORBING DAMPER WITH A SPRING PLATE FASTENED THERETO, AND METHOD FOR THE FASTENING OF A SPRING PLATE TO A SHOCK-ABSORBING DAMPER
AMORTISSEUR DE CHOCS SUR LEQUEL EST FIXEE UNE CUVETTE DE RESSORT ET PROCEDE DE FIXATION D'UNE CUVETTE DE RESSORT SUR UN AMORTISSEUR DE CHOCS

(30) Priorität: 05.11.2014 DE 102014116109
(43) Veröffentlichungstag der Anmeldung: 13.09.2017
(73) Patentinhaber: ThyssenKrupp Bilstein GmbH, 58256 Ennepetal (DE); thyssenkrupp AG, 45143 Essen (DE)
(72) Erfinder: REIMANN, Thilo, 58256 Ennepetal (DE); HÖNIG, Michael, 58256 Ennepetal (DE)
(74) Vertreter: thyssenkrupp Intellectual Property GmbH
(86) Internationale Anmeldenummer: PCT/EP2015/073589
(87) Internationale Veröffentlichungsnummer: WO 2016/071081

(56) Entgegenhaltungen:
- EP-A2- 2 009 322
- DE-C1- 10 120 415
- DE-C1- 19 851 019
- US-A1- 2005 218 574
- US-B1- 6 341 678

## Beschreibung

Die Erfindung betrifft eine Vorrichtung zum Dämpfen von Schwingungen, umfassend: ein hohles Dämpferrohr, eine Kolbenstange mit einem daran befestigten Kolben, wenigstens einen Federteller, und wenigstens ein Sicherungselement, wobei der Kolben innerhalb des Dämpferrohres angeordnet ist, und wobei der Federteller außerhalb des Dämpferrohres angeordnet ist.

Die Erfindung betrifft schließlich ein Verfahren zum Befestigen eines Federtellers an einem Dämpferrohr.

Auf dem Gebiet der Fahrzeugtechnik, insbesondere der Fahrwerkstechnik, sind zahlreiche Stoßdämpfer und Verfahren zu ihrer Herstellung bekannt. Stoßdämpfer sind Teil des Fahrwerks von Kraftfahrzeugen und wirken dort regelmäßig mit Federn zusammen: Während die Federn dafür sorgen, dass die Räder nach einer Auslenkung stets wieder in ihre Ausgangslage zurückgeführt werden, sorgen die Stoßdämpfer dafür, dass die durch die gefederte Lagerung zwangsläufig entstehenden Schwingungen der Räder möglichst schnell abklingen. "Stoßdämpfer" sollen also eigentlich keine Stöße, sondern Schwingungen dämpfen. Bei Stoßdämpfern handelt es sich demnach um Schwingungsdämpfer. Eine wirksame Schwingungsdämpfung wird nicht nur aus Komfortgründen angestrebt; sie dient auch dem Zweck, Radlastschwankungen zu verringern und somit eine gute Bodenhaftung der Räder sicherzustellen.

In der Praxis werden ganz überwiegend hydraulische Stoßdämpfer eingesetzt, die ein zylindrisches, mit Öl befülltes Gehäuse aufweisen, in dem ein ebenfalls zylindrischer Kolben über eine aus dem Gehäuse herausgeführte Kolbenstange in axialer Richtung hin- und her bewegt werden kann. Der Kolben weist kleine Öffnungen auf, die bei einer Bewegung des Kolbens von Öl durchströmt werden können. Hierbei entsteht ein Strömungswiderstand, durch den die Schwingungsenergie in Wärme umgewandelt und somit absorbiert wird.

Aufgrund der zylindrischen Form von Stoßdämpfern hat sich bereits früh eine Bauweise durchgesetzt, bei der als Feder eine spiralförmig gewundene Schraubenfeder eingesetzt wird, die derart angeordnet ist, dass die Windungen der Schraubenfeder außen um den Stoßdämpfer herum verlaufen. Der Stoßdämpfer ist also "in" der Schraubenfeder angeordnet. Derartige Kombinationen aus Stoßdämpfer und Feder werden auch als "Federbein" oder "Federträger" bezeichnet und beispielsweise bei den weit verbreiteten "MacPherson"-Federbeinen häufig eingesetzt (US 2,660,449). Eine besondere Herausforderung bei derartigen Federbeinen besteht darin, die Feder in zuverlässiger Weise an dem Stoßdämpfer zu befestigen. Hierzu sind an dem Stoßdämpfer regelmäßig Anlageflächen für die Feder vorgesehen, die ringförmig um den Stoßdämpfer umlaufen ("Federteller"). Da über die Federteller hohe Belastungen in den Stoßdämpfer eingeleitet werden, muss die Befestigung der Federteller an dem - oftmals dünnwandigen - Dämpferrohr des Stoßdämpfers durch eine besonders zuverlässige Verbindung erfolgen.

Bei aus dem Stand der Technik bekannten Lösungen wird der Federteller oftmals durch Schweißverbindungen an dem Dämpferrohr des Stoßdämpfers befestigt. Schweißverbindungen werden beispielsweise aufgrund ihrer hohen Zuverlässigkeit eingesetzt. Aufgrund der dünnwandigen Bauweise der Dämpferrohre und der damit verbundenen Gefahr von thermisch bedingtem Verzug können hierfür jedoch nur bestimmte Schweißverfahren eingesetzt werden, beispielsweise Laserschweißen. Derartige Schweißverbindungen sind jedoch relativ aufwändig zu erzeugen, da hierzu spezielle Schweißanlangen erforderlich sind, deren Anschaffung einen hohen Investitionsaufwand voraussetzt. Ein weiterer prinzipbedingter Nachteil von Schweißverbindungen liegt darin, dass nicht alle Materialpaarungen miteinander verschweißt werden können. Dies kann dazu führen, dass die Materialien nicht allein im Hinblick auf mechanische Eigenschaften und Kosten ausgewählt werden können, sondern auch im Hinblick auf ihre Schweißeigenschaften ausgewählt werden müssen.

Dokument DE 198 51 019 wird als nächstliegender Stand der Technik angesehen.

Vor diesem Hintergrund liegt der Erfindung die Aufgabe zugrunde, eine eingangs beschriebene und zuvor näher erläuterte Vorrichtung zum Dämpfen von Schwingungen derart auszugestalten und weiterzubilden, dass auf kostengünstige Weise eine zuverlässige Verbindung zwischen dem Federteller und dem Dämpferrohr erreicht wird.

Diese Aufgabe wird bei einer Vorrichtung nach dem Patentanspruch 1 erreicht.

Die Vorrichtung zeichnet sich zunächst durch ein hohles Dämpferrohr aus. Das Dämpferrohr dient der Aufnahme von Flüssigkeiten, die zur Schwingungsdämpfung eingesetzt werden sollen - beispielsweise Öl. Vorzugsweise ist das Dämpferrohr wenigstens abschnittsweise oder aber vollständig zylindrisch geformt und weist in Längsrichtung - also in axialer Richtung - eine Längsachse auf. Die Wandstärke des Dämpferrohrs kann im Bereich zwischen 1 mm und 5 mm liegen. Das Dämpferrohr ist bevorzugt aus Metall, insbesondere Stahl oder Aluminium, hergestellt. Das Dämpferrohr ist vorzugsweise zweiteilig ausgebildet, wobei die beiden Teile teleskopartig ineinander geschoben werden können. Es können auch zwei separate Dämpferrohre vorhanden sein, wobei das zweite Dämpferrohr vorzugsweise in dem ersten Dämpferrohr angeordnet ist ("Zweirohrdämpfer"). Die Vorrichtung umfasst zudem eine Kolbenstange mit einem daran befestigten Kolben. Über die Kolbenstange werden Zug- oder Druckkräfte, die in die Vorrichtung eingeleitet wurden, auf den Kolben übertragen. Der Kolben ist innerhalb des Dämpferrohres derart angeordnet, dass er in axialer Richtung verschoben werden kann. Weiterhin umfasst die Vorrichtung wenigstens einen Federteller. Der Federteller kann einer Tragfeder als Widerlager bzw. Anschlag dienen. Daher ist der Federteller - ebenso wie eine Tragfeder - vorzugsweise außerhalb des Dämpferrohres angeordnet. Bei der Tragfeder kann es sich um eine Schraubenfeder oder um eine Luftfeder, beispielsweise eine Balgfeder, handeln. Die Vorrichtung weist zudem ein Sicherungselement auf, das beispielsweise dazu dienen kann, den Federteller formschlüssig mit dem Dämpferrohr zu verbinden.

Erfindungsgemäß ist vorgesehen, dass der Federteller sowohl kraftschlüssig als auch formschlüssig mit dem Dämpferrohr verbunden ist. Unter einer kraftschlüssigen Verbindung wird eine Verbindung verstanden, die wesentlich auf der Reibung zwischen den verbundenen Bauteilen basiert (z.B. Pressverbindung). Unter einer formschlüssigen Verbindung wird hingegen eine Verbindung verstanden, die wesentlich auf dem Ineinandergreifen oder dem Aneinanderstoßen zwischen den verbundenen Bauteilen basiert. Durch eine Kombination von kraftschlüssigen und formschlüssigen Verbindungen kann eine besonders zuverlässige Anbindung des Federtellers an das Dämpferrohr erreicht werden. Zudem kann eine erleichterte Herstellung erreicht werden, da die formschlüssige Verbindung beispielsweise dazu eingesetzt werden kann, den Federteller während der Erzeugung der kraftschlüssigen Verbindung zu positionieren und zu fixieren. Die formschlüssige Verbindung kann also auch die Funktion einer "Montagehilfe" übernehmen. Vorzugsweise ist der Federteller ausschließlich kraftschlüssig und formschlüssig mit dem Dämpferrohr verbunden. Dies hat den Vorteil, dass auf weiteren Verbindungen, beispielsweise auf stoffschlüssige Schweiß- oder Klebverbindungen, verzichtet werden kann. Es kann vorgesehen sein, dass die kraftschlüssige Verbindung und die formschlüssige Verbindung in unterschiedliche Richtungen wirken. Beispielsweise kann die formschlüssige Verbindung den Federteller (ausschließlich) in axialer Richtung fixieren, während die kraftschlüssige Verbindung den Federteller (auch) in radialer Richtung fixiert.

Nach der Erfindung ist vorgesehen, dass der Federteller durch das Sicherungselement formschlüssig mit dem Dämpferrohr verbunden ist. Dies kann beispielsweise durch einen Sicherungsring, insbesondere einen Sprengring, erreicht werden, der an dem Dämpferrohr fixiert ist. Auf diese Weise stellt der Sicherungsring einen formschlüssigen Anschlag für den Federteller dar. Der Federteller kann einseitig oder beidseitig mit einem Sicherungsring fixiert werden. Durch das Sicherungselement kann demnach insbesondere eine formschlüssige Sicherung bzw. Fixierung des Federtellers in axialer Richtung erreicht werden.

Eine weitere erfindungsgemäße Ausbildung der Vorrichtung sieht vor, dass der Federteller durch eine Pressverbindung kraftschlüssig mit dem Sicherungselement und/oder dem Dämpferrohr verbunden ist. Die Pressverbindung kann beispielsweise durch Montage mit Temperaturdifferenzen oder durch plastische Verformung des Federtellers erreicht werden. Durch die Pressverbindung kann eine Sicherung bzw. Fixierung des Federtellers sowohl in axialer Richtung als auch in radialer Richtung erreicht werden.

In weiterer Ausgestaltung der Vorrichtung ist vorgesehen, dass das Sicherungselement ein Sicherungsring, insbesondere ein Sprengring ist. Sicherungsringe sind typischerweise nicht vollständig umlaufend gestaltet; sie weisen stattdessen eine Unterbrechung bzw. Öffnung auf, die die Montage auf einer Welle oder in einer Bohrung erleichtert. Sicherungsringe sind preisgünstig und leicht montierbar und können dazu dienen, eine axial belastbare Schulter zum Festlegen des Federtellers zu bilden.

Um die Fixierung des Sicherungselements zu erleichtern, weist das Dämpferrohr eine Nut zur Aufnahme des Sicherungselements auf. Nuten lassen sich insbesondere bei rotationssymmetrischen Bauteilen leicht erzeugen (z.B. durch Drehen) und bieten in axialer Richtung eine präzise Positionierung und eine sichere Fixierung des Sicherungselements.

Zu dieser Ausbildung wird weiter vorgeschlagen, dass die Nut in die Außenfläche des Dämpferrohrs eingeformt ist und ringförmig umlaufend ist. Eine unmittelbare Einformung der Nut in die Außenfläche des Dämpferrohres erlaubt eine Positionierung der Nut an jeder beliebigen Stelle des Dämpferrohres. Eine vollständig umlaufende Nut ist einfacher herstellbar als eine nur teilweise umlaufende Nut und ermöglicht zudem eine Montage von Sicherungselementen in beliebiger Drehstellung des Dämpferrohres.

Gemäß einer weiteren Ausgestaltung der Vorrichtung ist vorgesehen, dass der Federteller ringförmig ausgebildet ist und um das Dämpferrohr herum verläuft. Durch eine ringförmige, also vollständig umlaufende Gestaltung des Federtellers kann der Federteller eine Tragfeder, beispielsweise eine Schraubenfeder in beliebiger Drehstellung abstützen. Zudem können ringförmige Bauteile rotationssymmetrisch gestaltet sein und somit besonders einfach hergestellt und bearbeitet werden (z.B. durch Drehen). Weiterhin erlaubt die ringförmige Gestaltung eine einfache Montage, da der Federteller einfach auf das Dämpferrohr aufgeschoben werden kann bevor erforderlichenfalls weitere Herstellungsschritte erfolgen.

Eine weitere Ausbildung der Vorrichtung sieht vor, dass der Federteller eine Stufe aufweist. Zu dieser Ausbildung wird weiter vorgeschlagen, dass die Stufe an der Innenseite des Federtellers angeordnet ist und ringförmig umlaufend ist. Die Form und Größe der Stufe kann beispielsweise auf das Sicherungselement abgestimmt sein, so dass die Stufe als Anlage bzw. Auflage für das Sicherungselement dienen kann. Auf diese Weise kann auch eine Zentrierung des Federtellers erreicht werden. Eine weitere Funktion der Stufe kann darin liegen, dass ein unbeabsichtigtes Lösen und Herausfallen des Sicherungsringes aus der Nut - beispielsweise infolge von starken Vibrationen - verhindert wird. Durch die ringförmig umlaufende Gestaltung der Stufe kann der Federteller in einer beliebigen Drehstellung auf das Sicherungselement aufgesetzt werden.

Nach einer weiteren Ausgestaltung der Vorrichtung ist vorgesehen, dass der Federteller aus Metall, insbesondere aus Stahl oder Aluminium hergestellt ist. Metalle zeichnen sich durch hohe Steifigkeit und hohe Festigkeit aus, so dass der Federteller auch dynamischen Belastungen zuverlässig standhält. Metalle haben zudem den Vorteil, dass sie eine hohe Zähigkeit aufweisen und somit beispielsweise gut plastisch verformt werden können.

Die zuvor beschriebene Vorrichtung zum Dämpfen von Schwingungen eignet sich in allen dargestellten Ausgestaltungen in besonderer Weise zur Verwendung in einem Kraftfahrzeug. Dies liegt insbesondere daran, dass die Vorrichtung schnell und kostengünstig herstellbar ist, was bei den in der Automobilindustrie üblichen Stückzahlen unerlässlich ist. Zudem sind Stoßdämpfer bzw. Schwingungsdämpfer in Kraftfahrzeugen besonderen Belastungen ausgesetzt, da die Stoßdämpfer dort nicht nur durch die zu dämpfende Schwingung belastet werden, sondern regelmäßig auch weiteren Einflüssen ausgesetzt sind (z.B. Vibrationen, Temperaturschwankungen). Diesen Anforderungen trägt die beschriebene Vorrichtung beispielsweise durch die besonders zuverlässige Kombination aus kraftschlüssiger und formschlüssiger Befestigung des Federtellers an dem Dämpferrohr Rechnung.

Die eingangs beschriebene Aufgabe wird auch gelöst durch ein Verfahren zum Befestigen eines Federtellers an einem Dämpferrohr, umfassend die folgenden Schritte: a) Bereitstellen eines Dämpferrohres, eines Sicherungselements und eines Federtellers, b) Einformen einer Nut in das Dämpferrohr, c) Einsetzen des Sicherungselements in die Nut, d) Aufschieben des Federtellers auf das Dämpferrohr, und e) Erzeugen einer Pressverbindung zwischen dem Federteller und dem Dämpferrohr durch plastisches Umformen des Federtellers.

Das Verfahren zeichnet sich dadurch aus, dass zunächst ein Dämpferrohr, ein Sicherungselement und ein Federteller bereitgestellt werden. Anschließend wird eine Nut in das Dämpferrohr eingeformt und das Sicherungselement wird in die Nut eingesetzt. Das Einformen der Nut kann beispielsweise durch Drehen erfolgen. Sodann wird der Federteller auf das Dämpferrohr aufgeschoben. Vorzugsweise wird der Federteller so weit auf das Dämpferrohr aufgeschoben, bis er an das Sicherungselement stößt. Das Sicherungselement kann also als axialer Anschlag für den Federteller dienen. Schließlich wird eine Pressverbindung zwischen dem Federteller und dem Dämpferrohr erzeugt, indem der Federteller plastisch umgeformt wird. Es kann vorgesehen sein, das ausschließlich der Federteller verformt wird. Alternativ kann vorgesehen sein, dass neben dem Federteller auch weitere Bauteile, insbesondere das Sicherungselement und/oder das Dämpferrohr plastisch umgeformt werden.

Nach einer Ausgestaltung des Verfahrens ist vorgesehen, dass in Schritt e) wenigstens zwei Werkzeuge in axialer Richtung bewegt werden und dabei beidseitig auf den Federteller einwirken. Durch den Einsatz von zwei gegeneinander- bzw. zusammenwirkenden Werkzeugen kann erreicht werden, dass die bei der Umformung in den Federteller eingeleiteten Kräfte nicht durch das Sicherungselement oder das Dämpferrohr abgestützt werden müssen, sondern weitgehend durch die beiden Werkzeuge aufgenommen werden. Zudem ermöglicht der Einsatz von mehreren Werkzeugen eine besonders flexible Umformung des Federtellers. Beispielsweise kann der Federteller an seiner Oberseite in anderer Weise umgeformt werden als an seiner Unterseite.

Zu dieser Ausgestaltung wird weiter vorgeschlagen, dass die Werkzeuge ringförmig umlaufend sind und auf das Dämpferrohr aufgeschoben sind. Indem die Werkzeuge ringförmig gestaltet sind, kann eine Führung und Zentrierung der Werkzeuge durch das Dämpferrohr erreicht werden. Ein weiterer Vorteil dieser Gestaltung der Werkzeuge liegt darin, dass die Federteller entlang ihres gesamten Umfangs gleichzeitig umgeformt werden können, was die Herstellung beschleunigt.

Im Hinblick auf die Gestaltung der Werkzeuge wird schließlich weiter vorgeschlagen, dass die Werkzeuge Vorsprünge aufweisen, mit denen sie auf den Federteller einwirken. Durch die Vorsprünge kann eine besonders hohe Druckkonzentration und somit eine besonders wirkungsvolle Umformung erreicht werden. Zudem können die Vorsprünge bedarfsgerecht angeordnet und geformt werden. Beispielsweise können die Vorsprünge auch bei ringförmiger Gestaltung der Werkzeuge Unterbrechungen aufweisen und somit nicht ringförmig oder umlaufend gestaltet sein. Dies erlaubt eine Umformung des Federtellers nur in bestimmten Bereichen bzw. Segmenten.

Die Erfindung wird nachfolgend anhand einer lediglich ein bevorzugtes Ausführungsbeispiel darstellenden Zeichnung näher erläutert. In der Zeichnung

zeigen:
- Fig. 1:: eine erfindungsgemäße Vorrichtung in einer geschnittenen Ansicht,
- Fig. 2A:: eine vergrößerte Detailansicht des in Fig. 1 mit II bezeichneten Bereiches der Vorrichtung bei einem ersten Herstellungsschritt,
- Fig. 2B:: eine vergrößerte Detailansicht des in Fig. 1 mit II bezeichneten Bereiches der Vorrichtung bei einem zweiten Herstellungsschritt, und
- Fig. 2C:: eine vergrößerte Detailansicht des in Fig. 1 mit II bezeichneten Bereiches der Vorrichtung nach abgeschlossener Herstellung.

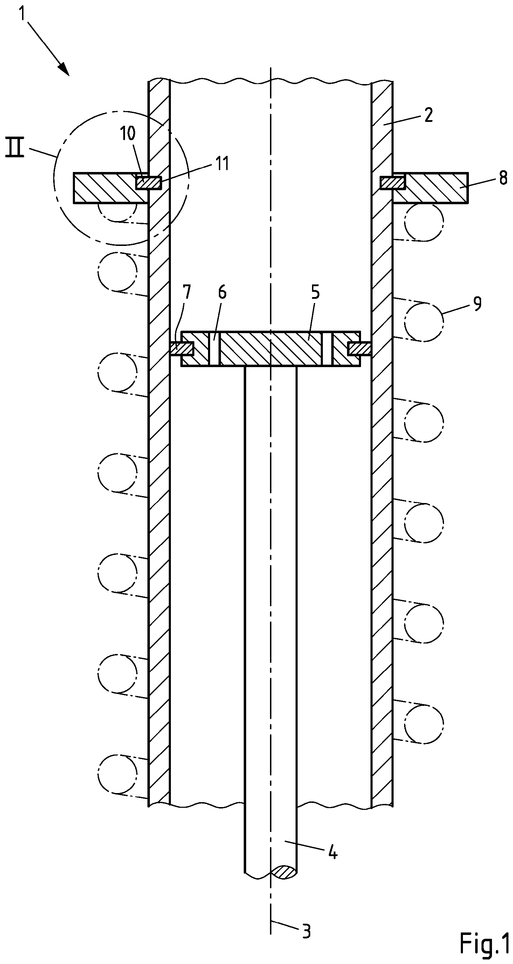

In Fig. 1 ist eine erfindungsgemäße Vorrichtung 1 zum Dämpfen von Schwingungen dargestellt. Die Vorrichtung 1 umfasst ein Dämpferrohr 2, das zylindrisch geformt ist und eine in axialer Richtung verlaufende Längsachse 3 aufweist. Das Dämpferrohr 2 ist hohl ausgebildet und kann in seinem Innenraum eine (in Fig. 1 nicht dargestellte) Flüssigkeit aufnehmen, beispielsweise Öl. Die Vorrichtung 1 umfasst zudem eine Kolbenstange 4, an deren unterem Ende ein Kolben 5 befestigt ist. Die Kolbenstange 4 ist zentral in dem Dämpferrohr 2 angeordnet und verläuft somit entlang der Längsachse 3. Der Kolben 5 weist wenigstens ein Kolbenventil 6 sowie eine umlaufende Dichtung 7 auf. Die Dichtung 7 verhindert, dass die in dem Dämpferrohr 2 vorhandene Flüssigkeit bei einer Bewegung des Kolbens 5 an dem Kolben 5 vorbeiströmt. Die Flüssigkeit kann somit nur durch die Kolbenventile 6 strömen, wobei Strömungsenergie in Wärme umgewandelt wird.

Die in Fig. 1 dargestellte Vorrichtung 1 umfasst zudem einen Federteller 8, der ringförmig bzw. scheibenförmig ausgebildet ist und um das Dämpferrohr 2 herum verläuft. Der Federteller 8 dient einer Schraubenfeder 9 als Anschlag, deren Windungen um das Dämpferrohr 2 herum verlaufen. Alternativ hierzu kann der Federteller 8 einer (in Fig. 1 nicht dargestellten) Luftfeder als Anschlag dienen. Die Befestigung des Federtellers 8 erfolgt über ein Sicherungselement 10, das den Federteller 8 in Richtung der Längsachse 3 formschlüssig mit dem Dämpferrohr 2 verbindet sowie über eine kraftschlüssige Pressverbindung. Bei dem Sicherungselement 10 kann es sich beispielsweise um einen Sicherungsring oder um einen Sprengring handeln. Das Sicherungselement 10 ist in einer Nut 11 angeordnet, die in die Außenfläche des Dämpferrohrs 2 eingeformt ist und ringförmig um das Dämpferrohr 2 umläuft.

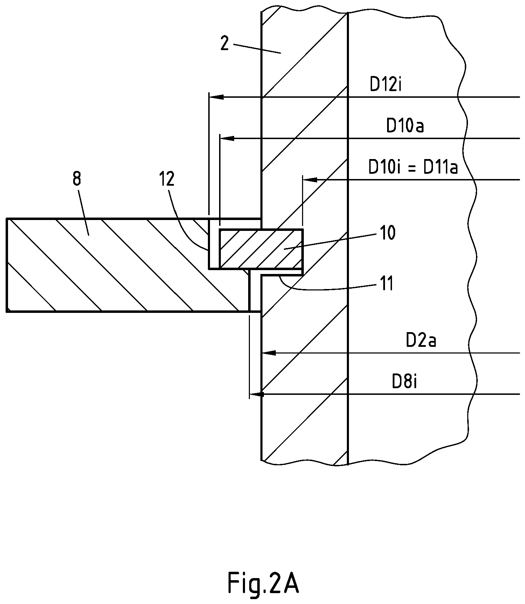

Fig. 2A zeigt eine vergrößerte Detailansicht des in Fig. 1 mit II bezeichneten Bereiches der Vorrichtung bei einem ersten Herstellungsschritt. In der vergrößerten Ansicht ist insbesondere der Verbindungsbereich zwischen dem Dämpferrohr 2 und dem Federteller 8 dargestellt. Die bereits im Zusammenhang mit Fig. 1 beschriebenen Bereiche der Vorrichtung sind in Fig. 2A mit entsprechenden Bezugszeichen versehen. In Fig. 2A ist erkennbar, dass das Dampferrohr 2 eine zylindrische Außenfläche mit einem Außendurchmesser D2a aufweist und dass der Federteller 8 eine zylindrische Innenfläche mit einem Innendurchmesser D8i aufweist, wobei der Außendurchmesser D2a des Dämpferrohrs 2 bei dem in Fig. 2A gezeigten Herstellungsschritt kleiner ist als der Innendurchmesser D8i des Federtellers 8. Dies hat zur Folge, dass der Federteller 8 lose auf das Dämpferrohr 2 aufgeschoben werden kann. Die umlaufende Nut 11 ist von außen in das Dämpferrohr 2 eingeformt und dient dem Sicherungselement 10 als Sitz. Um eine formschlüssige Verbindung auszubilden, weist das Sicherungselement 10 einen Innendurchmesser D10i und einen Außendurchmesser D10a auf, wobei der Innendurchmesser D10i des Sicherungselements 10 kleiner ist als der Außendurchmesser D2a des Dämpferrohrs 2 und wobei der Außendurchmesser D10a des Sicherungselements 10 größer ist als der Außendurchmesser D2a des Dämpferrohrs 2. Bei dem in Fig. 2A gezeigten Herstellungsschritt entspricht der Innendurchmesser D10a des Sicherungselements 10 dem Außendurchmesser D11a der Nut 11. Der Federteller 8 weist an seiner Innenseite eine umlaufende Stufe 12 auf. Die Stufe 12 hat einen Innendurchmesser D12i, der bei dem in Fig. 2A gezeigten Herstellungsschritt größer ist als der Außendurchmesser D10a des Sicherungselements 10. Auf diese Weise kann der Federteller 8 lose auf das Sicherungselement 10 aufgeschoben werden.

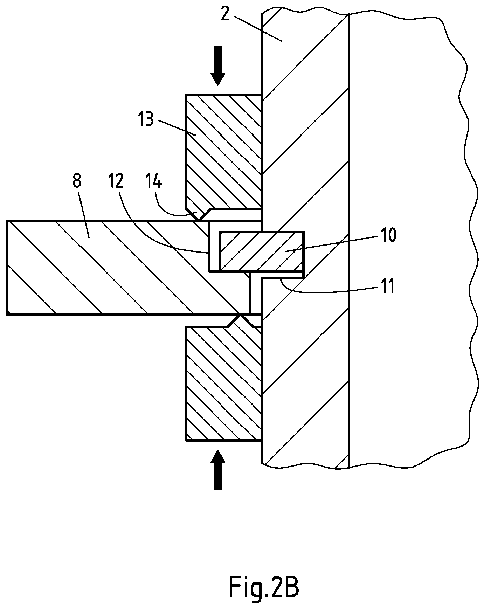

In Fig. 2B ist eine vergrößerte Detailansicht des in Fig. 1 mit II bezeichneten Bereiches der Vorrichtung 1 bei einem zweiten Herstellungsschritt dargestellt. Auch in Fig. 2B sind die bereits im Zusammenhang mit Fig. 1 oder Fig. 2A beschriebenen Bereiche der Vorrichtung 1 mit entsprechenden Bezugszeichen versehen. Im Unterschied zum ersten Herstellungsschritt (Fig. 2A) sind bei dem zweiten Herstellungsschritt (Fig. 2B) zwei ringförmige Werkzeuge 13 beidseitig des Federtellers 8 auf das Dämpferrohr 2 aufgeschoben. Die Werkzeuge 13 weisen Vorsprünge 14 auf, die an der dem Federteller 8 zugeordneten Seite des jeweiligen Werkzeugs 13 angeordnet sind. Die beiden Werkzeuge 13 werden in axialer Richtung - also entlang der Längsachse 3 - aufeinander zubewegt und verformen hierbei bestimmte Bereiche des Federtellers 8 plastisch. Die Bewegungsrichtung der Werkzeuge 13 ist in Fig. 2B schematisch durch Pfeile dargestellt.

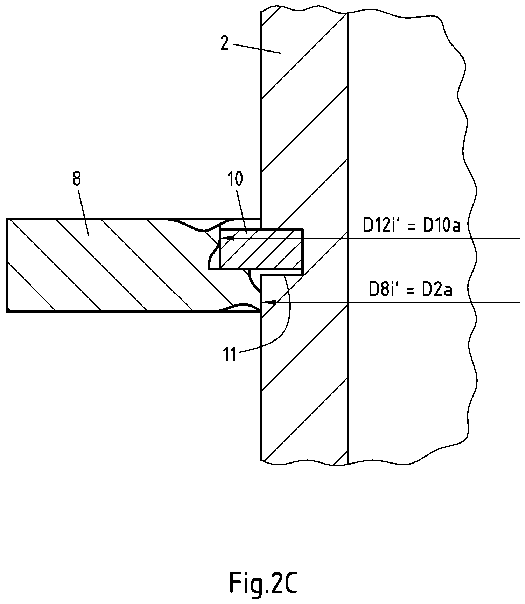

Fig. 2C zeigt schließlich eine vergrößerte Detailansicht des in Fig. 1 mit II bezeichneten Bereiches der Vorrichtung 1 nach abgeschlossener Herstellung. Auch in Fig. 2C sind die bereits im Zusammenhang mit Fig. 1 bis Fig. 2B beschriebenen Bereiche der Vorrichtung 1 mit entsprechenden Bezugszeichen versehen. Fig. 2C zeigt einen Zustand, in dem der Federteller 8 durch die Werkzeuge 13 plastisch verformt worden ist und die Werkzeuge 13 bereits wieder von dem Dämpferrohr 2 abgezogen worden sind. Deutlich erkennbar ist eine plastische Verformung des Federtellers 8, die dazu führt, dass der Innendurchmesser D8i' des Federtellers 8 sich verkleinert hat und nun dem Außendurchmesser D2a des Dämpferrohres 2 entspricht. Eine radiale Relativbewegung zwischen dem Federteller 8 und dem Dämpferrohr 2 ist daher nicht mehr möglich. Die plastische Verformung des Federtellers 8 führt zudem dazu, dass der Innendurchmesser D12i' der Stufe 12 sich verkleinert hat und nun dem Außendurchmesser D10a des Sicherungselements 10 entspricht. Auch zwischen dem Federteller 8 und dem Sicherungselement 10 ist daher keine radiale Relativbewegung mehr möglich. An der Kontaktfläche zwischen dem Federteller 8 - insbesondere seiner Stufe 12 - und dem Sicherungselement 10 sowie an der Kontaktfläche zwischen dem Federteller 8 und dem Dämpferrohr 2 entstehen aufgrund der Reibung kraftschlüssige Verbindungen.

Bei der in Fig. 1 bis Fig. 2C beschriebenen Variante der Vorrichtung 1 handelt es sich um einen Einrohrdämpfer. Die beschrieben Merkmale, insbesondere die Verbindung zwischen dem Federteller 8 und dem Dämpferrohr 2 lassen sich jedoch auch auf andere Bauarten von Stoßdämpfern übertragen, insbesondere auf Zweirohrdämpfer.

### Bezugszeichenliste:

- 1:: Vorrichtung zum Dämpfen von Schwingungen
- 2:: Dämpferrohr
- 3:: Längsachse (des Dämpferrohrs 2)
- 4:: Kolbenstange
- 5:: Kolben
- 6:: Kolbenventil
- 7:: Dichtung
- 8:: Federteller
- 9:: Schraubenfeder
- 10:: Sicherungselement
- 11:: Nut
- 12:: Stufe
- 13:: Werkzeug
- 14:: Vorsprung

- D2a:: Außendurchmesser (des Dämpferrohres 2)
- D8i, D8i':: Innendurchmesser (des Federtellers 8)
- D10a:: Außendurchmesser (des Sicherungselements 10)
- D10i:: Innendurchmesser (des Sicherungselements 10)
- D11a:: Außendurchmesser (der Nut 11)
- D12i, D12i':: Innendurchmesser (der Stufe 12)

## Patentansprüche

1. Vorrichtung (1) zum Dämpfen von Schwingungen, umfassend:
- ein hohles Dämpferrohr (2),
- eine Kolbenstange (4) mit einem daran befestigten Kolben (5),
- wenigstens einen Federteller (8), und
- wenigstens ein Sicherungselement (10),
- wobei der Kolben (5) innerhalb des Dämpferrohres (2) angeordnet ist,
- wobei der Federteller (8) außerhalb des Dämpferrohres (2) angeordnet ist,
- wobei der Federteller (8) sowohl kraftschlüssig als auch formschlüssig mit dem Dämpferrohr (2) verbunden ist, und
- wobei der Federteller (8) durch das Sicherungselement (10) formschlüssig mit dem Dämpferrohr (2) verbunden ist,
**dadurch gekennzeichnet, dass**
der Federteller (8) durch eine Pressverbindung kraftschlüssig mit dem Dämpferrohr (2) verbunden ist und das Dämpferrohr (2) eine Nut (11) zur Aufnahme des Sicherungselements (10) aufweist.

2. Vorrichtung nach Anspruch 1,
**dadurch gekennzeichnet, dass**
der Federteller (8) durch eine Pressverbindung kraftschlüssig mit dem Sicherungselement (10) verbunden ist.

3. Vorrichtung nach einem der Ansprüche 1 bis 2,
**dadurch gekennzeichnet, dass**
das Sicherungselement (10) ein Sicherungsring, insbesondere ein Sprengring ist.

4. Vorrichtung nach einem der Ansprüche 1 bis 3,
**dadurch gekennzeichnet, dass**
die Nut (11) in die Außenfläche des Dämpferrohrs (2) eingeformt ist und ringförmig umlaufend ist.

5. Vorrichtung nach einem der Ansprüche 1 bis 4,
**dadurch gekennzeichnet, dass**
der Federteller (8) ringförmig ausgebildet ist und um das Dämpferrohr (2) herum verläuft.

6. Vorrichtung nach einem der Ansprüche 1 bis 5,
**dadurch gekennzeichnet, dass**
der Federteller (8) eine Stufe (12) aufweist.

7. Vorrichtung nach Anspruch 6,
**dadurch gekennzeichnet, dass**
die Stufe (12) an der Innenseite des Federtellers (8) angeordnet ist und ringförmig umlaufend ist.

8. Vorrichtung nach einem der Ansprüche 1 bis 7,
**dadurch gekennzeichnet, dass**
der Federteller (8) aus Metall, insbesondere aus Stahl oder Aluminium hergestellt ist.

9. Verfahren zum Befestigen eines Federtellers (8) an einem Dämpferrohr (2), umfassend die folgenden Schritte:
a) Bereitstellen eines Dämpferrohres (2), eines Sicherungselements (10) und eines Federtellers (8),
b) Einformen einer Nut (11) in das Dämpferrohr (2),
c) Einsetzen des Sicherungselements (10) in die Nut (11),
d) Aufschieben des Federtellers (8) auf das Dämpferrohr (2), und
e) Erzeugen einer Pressverbindung zwischen dem Federteller (8) und dem Dämpferrohr (2) durch plastisches Umformen des Federtellers (8).

10. Verfahren nach Anspruch 9,
**dadurch gekennzeichnet, dass**
in Schritt e) wenigstens zwei Werkzeuge (13) in axialer Richtung bewegt werden und dabei beidseitig auf den Federteller (8) einwirken.

11. Verfahren nach Anspruch 10,
**dadurch gekennzeichnet, dass**
die Werkzeuge (13) ringförmig umlaufend sind und auf das Dämpferrohr (2) aufgeschoben werden.

12. Verfahren nach Anspruch 10 oder 11,
**dadurch gekennzeichnet, dass**
die Werkzeuge (13) Vorsprünge (14) aufweisen, mit denen sie auf den Federteller (8) einwirken.

## Claims

1. Device (1) for damping vibrations, comprising:
- a hollow damper tube (2),
- a piston rod (4) with a piston (5) fastened thereto,
- at least one spring plate (8), and
- at least one securing element (10),
- wherein the piston (5) is arranged within the damper tube (2),
- wherein the spring plate (8) is arranged outside the damper tube (2),
- wherein the spring plate (8) is connected to the damper tube (2) both frictionally and in a form-fitting manner, and
- wherein the spring plate (8) is connected to the damper tube (2) in a form-fitting manner by the securing element (10),
**characterized in that**
the spring plate (8) is connected to the damper tube (2) frictionally by a press connection and the damper tube (2) comprises a groove (11) for receiving the securing element (10).

2. Device according to Claim 1,
**characterized in that**
the spring plate (8) is connected to the securing element (10) frictionally by a press connection.

3. Device according to either of Claims 1 and 2,
**characterized in that**
the securing element (10) is a securing ring, in particular a snap ring.

4. Device according to one of Claims 1 to 3,
**characterized in that**
the groove (11) is molded into the outer surface of the damper tube (2) and is annularly encircling.

5. Device according to one of Claims 1 to 4,
**characterized in that**
the spring plate (8) is of annular design and runs around the damper tube (2).

6. Device according to one of Claims 1 to 5,
**characterized in that**
the spring plate (8) comprises a step (12).

7. Device according to Claim 6,
**characterized in that**
the step (12) is arranged on the inner side of the spring plate (8) and is annularly encircling.

8. Device according to one of Claims 1 to 7,
**characterized in that**
the spring plate (8) is produced from metal, in particular from steel or aluminum.

9. Method for fastening a spring plate (8) to a damper tube (2), comprising the following steps:
a) providing a damper tube (2), a securing element (10) and a spring plate (8),
b) molding a groove (11) into the damper tube (2),
c) inserting the securing element (10) into the groove (11),
d) pushing the spring plate (8) onto the damper tube (2), and
e) producing a press connection between the spring plate (8) and the damper tube (2) by plastic deformation of the spring plate (8).

10. Method according to Claim 9,
**characterized in that**
in step e), at least two tools (13) are moved in the axial direction and act here on both sides of the spring plate (8).

11. Method according to Claim 10,
**characterized in that**
the tools (13) are annularly encircling and are pushed onto the damper tube (2).

12. Method according to Claim 10 or 11,
**characterized in that**
the tools (13) have projections (14) with which said tools act on the spring plate (8).

## Revendications

1. Dispositif (1) pour l'amortissement d'oscillations, comprenant :
- un tube amortisseur creux (2),
- une tige de piston (4) à laquelle est fixée un piston (5),
- au moins une cuvette de ressort (8), et
- au moins un élément de retenue (10),
- dans lequel le piston (5) est agencé à l'intérieur du tube amortisseur (2),
- dans lequel la cuvette de ressort (8) est agencée à l'extérieur du tube amortisseur (2),
- dans lequel la cuvette de ressort (8) est raccordée avec le tube amortisseur (2) aussi bien par accouplement de force que par accouplement de forme, et
- dans lequel la cuvette de ressort (8) est raccordée avec le tube amortisseur (2) par accouplement de forme par l'élément de retenue (10),
**caractérisé en ce que**
la cuvette de ressort (8) est raccordée par une liaison par pression par accouplement de force avec le tube amortisseur (2) et le tube amortisseur (2) comprend une rainure (11) pour la réception de l'élément de retenue (10) .

2. Dispositif selon la revendication 1, **caractérisé en ce que** la cuvette de ressort (8) est raccordée par une liaison par pression par accouplement de force avec l'élément de retenue (10).

3. Dispositif selon l'une quelconque des revendications 1 à 2, **caractérisé en ce que** l'élément de retenue (10) est une bague de retenue, notamment une bague d'arrêt.

4. Dispositif selon l'une quelconque des revendications 1 à 3, **caractérisé en ce que** la rainure (11) est formée dans la surface extérieure du tube amortisseur (2) et est circonférentielle sous forme annulaire.

5. Dispositif selon l'une quelconque des revendications 1 à 4, **caractérisé en ce que** la cuvette de ressort (8) est configurée sous forme annulaire et passe autour du tube amortisseur (2).

6. Dispositif selon l'une quelconque des revendications 1 à 5, **caractérisé en ce que** la cuvette de ressort (8) comprend un étage (12).

7. Dispositif selon la revendication 6, **caractérisé en ce que** l'étage (12) est agencé sur le côté intérieur de la cuvette de ressort (8) et est circonférentiel sous forme annulaire.

8. Dispositif selon l'une quelconque des revendications 1 à 7, **caractérisé en ce que** la cuvette de ressort (8) est fabriquée en métal, notamment en acier ou en aluminium.

9. Procédé de fixation d'une cuvette de ressort (8) sur un tube amortisseur (2), comprenant les étapes suivantes :
a) la mise à disposition d'un tube amortisseur (2), d'un élément de retenue (10) et d'une cuvette de ressort (8),
b) la formation d'une rainure (11) dans le tube amortisseur (2),
c) l'insertion de l'élément de retenue (10) dans la rainure (11),
d) le glissement de la cuvette de ressort (8) sur le tube amortisseur (2), et
e) la génération d'une liaison par pression entre la cuvette de ressort (8) et le tube amortisseur (2) par déformation plastique de la cuvette de ressort (8).

10. Procédé selon la revendication 9, **caractérisé en ce qu'**à l'étape e), au moins deux outils (13) sont déplacés dans la direction axiale, et agissent ainsi des deux côtés sur la cuvette de ressort (8).

11. Procédé selon la revendication 10, **caractérisé en ce que** les outils (13) sont circonférentiels sous forme annulaire et sont glissés sur le tube amortisseur (2).

12. Procédé selon la revendication 10 ou 11, **caractérisé en ce que** les outils (13) présentent des protubérances (14), avec lesquelles ils agissent sur la cuvette de ressort (8).
